# EUROPÄISCHE PATENTSCHRIFT

(11) **EP 3 039 212 B1**
(45) Veröffentlichungstag und Bekanntmachung des Hinweises auf die Patenterteilung: **09.08.2017**
(21) Anmeldenummer: 14743985.5
(22) Anmeldetag: 16.06.2014
(51) Int. Cl.: E05D 11/10, E05F 1/10

(54) **STELLANTRIEB FÜR BEWEGBARE MÖBELTEILE**
ACTUATOR FOR MOVABLE FURNITURE PARTS
DISPOSITIF DE COMMANDE DE PARTIES DE MEUBLES MOBILE

(30) Priorität: 30.08.2013 AT 6732013
(43) Veröffentlichungstag der Anmeldung: 06.07.2016
(73) Patentinhaber: Julius Blum GmbH, 6973 Höchst (AT)
(72) Erfinder: LUTZ, Markus, A-6973 Höchst (AT) (AT)
(74) Vertreter: Torggler & Hofinger Patentanwälte
(86) Internationale Anmeldenummer: PCT/AT2014/000126
(87) Internationale Veröffentlichungsnummer: WO 2015/027251

(56) Entgegenhaltungen:
- DE-A1- 10 019 337
- DE-C1- 19 918 823
- US-B1- 6 637 319

## Beschreibung

Die vorliegende Erfindung bezieht sich auf einen Stellantrieb zum Bewegen eines bewegbaren Möbelteiles, umfassend:
- zumindest ein bewegbar gelagertes Stellglied zum Bewegen des bewegbaren Möbelteiles,
- eine Federvorrichtung zur Kraftbeaufschlagung des Stellgliedes,
- eine Einstellvorrichtung, durch welche eine auf das Stellglied wirkende Kraft der Federvorrichtung einstellbar ist,
- wobei die Einstellvorrichtung einen Gewindeabschnitt und eine zwischen zwei Endlagen verstellbar gelagerte Schraubenmutter aufweist, wobei die auf das Stellglied wirkende Kraft der Federvorrichtung durch Verstellen der Schraubenmutter entlang des Gewindeabschnitts einstellbar ist.

Im Weiteren betrifft die Erfindung eine Anordnung mit einem bewegbaren Möbelteil, welches über einen Stellantrieb der zu beschreibenden Art bewegbar gelagert ist. US 6 637 319 B1 offenbart einen Stellantrieb nach dem Oberbegriff des Anspruchs 1. In der DE 1 584 088 B1 und in der DE 1 191 257 B sind jeweils Scharniere mit einer Druckfeder zum Gewichtsausgleich von Kühltruhenklappen gezeigt, wobei die Kraft der Druckfeder durch Drehung eines Führungsrohres einstellbar ist. An diesem Führungsrohr ist ein Teller gelagert, an welchem sich die Druckfeder mit einem Ende abstützt. Das Führungsrohr ist mit einem Außengewinde versehen, welches mit einer an einem feststehenden Scharnierteil aufliegenden Wippe in Gewindeeingriff steht.

Ein Stellantrieb in Form einer so genannten Klappenstütze ist beispielsweise in der DE 100 19 337 A1 beschrieben. Diese Klappenstütze umfasst zwei gelenkig miteinander verbundene Armteile, wobei ein klappenseitiger Armteil durch die Kraft einer Druckfeder in Öffnungsrichtung beaufschlagt ist. Zur Einstellung der auf die Klappe ausgeübten Kraft ist eine Einstellvorrichtung vorgesehen, welche einen verstellbaren Gewindebolzen und eine mit dem Gewindebolzen im Gewindeeingriff stehende Gewindemutter umfasst.

Bei Einstellvorrichtungen mit einer Schraubenmutter, welche entlang eines Gewindeabschnitts verstellbar gelagert ist, tritt häufig das Problem auf, dass sich die Schraubenmutter bei Erreichen einer Endlage mit einem Gegenanschlag (beispielsweise mit der Unterseite eines Schraubenkopfes) verklemmt. Tritt eine solche Verklemmung zwischen der verstellbaren Schraubenmutter und dem Gegenanschlag einmal auf, so ist diese nur mit einem erhöhten manuellen Kraftaufwand wieder zu lösen. Das Lösen der Verklemmung wird zudem durch die Kraft der beaufschlagenden Federvorrichtung erschwert, weil eine Person durch erhöhten Kraftaufwand die Verklemmung entgegen der Kraft der Federvorrichtung lösen muss.

Aufgabe der vorliegenden Erfindung ist es daher, einen Stellantrieb der eingangs erwähnten Gattung unter Vermeidung obiger Nachteile anzugeben.

Dies wird erfindungsgemäß durch die Merkmale des Patentanspruchs 1 gelöst. Weitere vorteilhafte Ausgestaltungen der Erfindung sind in den abhängigen Unteransprüchen angegeben.

Gemäß der Erfindung ist also vorgesehen, dass wenigstens ein Stützelement vorgesehen ist, welches die Schraubenmutter in zumindest einer der beiden Endlagen von der Kraft der Federvorrichtung entlastet.

Mit anderen Worten wird die Kraft der Federvorrichtung in wenigstens einer der beiden Endlagen der Schraubenmutter nicht von der Schraubenmutter selbst, sondern über das Stützelement in ein Gehäuseteil des Stellantriebes eingeleitet. Die Schraubenmutter ist folglich in wenigstens einer Endlage von der Kraft der Federvorrichtung unbelastet, sodass die Schraubenmutter ohne einen von der Federvorrichtung ausgeübten Axialdruck leicht zu verstellen ist.

Zur Abstützung des Stützelementes weist der Stellantrieb ein Gehäuse auf, wobei das Stützelement in wenigstens einer der beiden Endlagen der Schraubenmutter an einem gehäusefesten Gegenanschlag abgestützt ist, wobei sich die Federvorrichtung indirekt über das Stützelement an der Schraubenmutter abstützt. Weitere Einzelheiten und Vorteile der vorliegenden Erfindung ergeben sich anhand des in den Figuren gezeigten Ausführungsbeispiels. Dabei zeigt bzw. zeigen:
- Fig. 1a , 1 b: ein Möbel mit einer hochbewegbaren Klappe in einer Schließstellung und in einer Offenstellung,
- Fig. 2a, 2b: ein Ausführungsbeispiel eines Stellantriebes in einem perspektivischen Querschnitt sowie eine vergrößerte Detaildarstellung hierzu,
- Fig. 3a, 3b: den Stellantrieb in einem perspektivischen Schnitt sowie ein Detailbereich in einer vergrößerten Darstellung,
- Fig. 4a, 4b: den Stellantrieb mit verstellter Schraubenmutter in einem perspektivischen Schnitt sowie ein Detailbereich in einer vergrößerten Darstellung,
- Fig. 5a, 5b: den Stellantrieb in einem perspektivischen Querschnitt mit einer in einer Endlage befindlichen Schraubenmutter sowie eine vergrößerte Detaildarstellung hierzu.

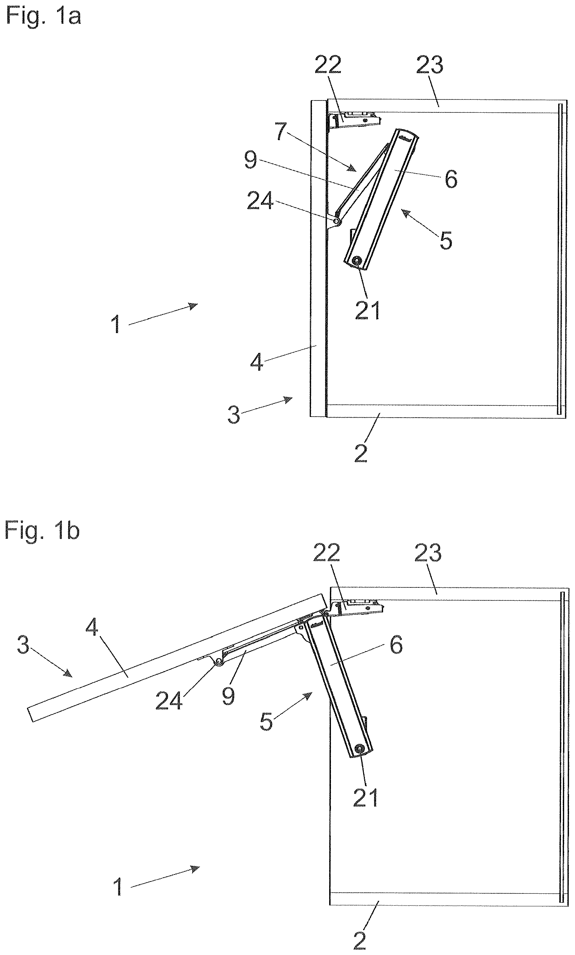

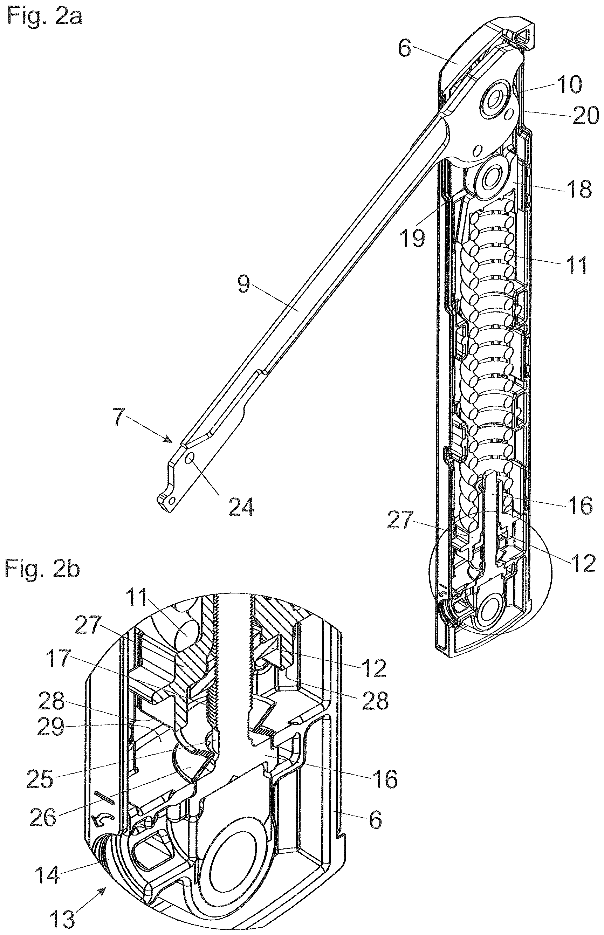

Fig. 1 a zeigt eine perspektivische Ansicht eines Möbels 1 mit einem Möbelkorpus 2 und mit einem bewegbaren Möbelteil 3 in Form einer Klappe 4, welche relativ zum Möbelkorpus 2 hochbewegbar gelagert ist. Fig. 1b zeigt das Möbel 1 mit der Klappe 4 in einer Offenstellung, wobei die Klappe 4 über Scharniere 22 gegenüber einem Schrankdeckel 23 des Möbelkorpus 2 schwenkbar abgestützt ist. Zum Bewegen der Klappe 4 ist ein Stellantrieb 5 mit einem Gehäuse 6 vorgesehen, welches relativ zum Möbelkorpus 2 an einer Lagerachse 21 schwenkbar gelagert ist. Ferner umfasst der Stellantrieb 5 ein bewegbar gelagertes Stellglied 7, welches im gezeigten Ausführungsbeispiel als Stellarm 9 ausgebildet ist, der in Montagelage um eine horizontal verlaufende Drehachse 10 (Fig. 2a) schwenkbar ist. Durch den Stellantrieb 5 ist die Klappe 4 zwischen einer vertikalen Schließstellung (Fig. 1 a) und einer hochgeschwenkten, den Zugang zum Möbelkorpus 2 freigebenden Offenstellung (Fig.1 b) bewegbar gelagert. Der schwenkbar gelagerte Stellarm 9 ist mit der Klappe 4 über eine Achse 24 verbunden.

Fig. 2a zeigt den Stellantrieb 5 in einem perspektivischen Querschnitt, wobei das Stellglied 7 in Form des Stellarmes 9 um eine in Montagelage horizontal verlaufende Drehachse 10 schwenkbar gelagert ist. Das freie Ende des Stellarmes 9 ist über die Achse 24 gelenkig mit der Klappe 4 zu verbinden. Der Stellantrieb 5 umfasst ein am Möbelkorpus 2 zu befestigendes Gehäuse 6, in dem eine Federvorrichtung 11 aufgenommen ist. Im gezeigten Ausführungsbeispiel umfasst die Federvorrichtung 11 zumindest eine als Schraubenfeder ausgebildete Druckfeder, es können aber auch zwei oder mehrere - vorzugsweise parallel geschaltete - Schraubenfedern vorgesehen werden. Ein erster Endbereich der Federvorrichtung 11 stützt sich an einem Stützelement 27 ab, ein zweiter Endbereich der Federvorrichtung 11 liegt an einem Schieber 18 an, welcher in Längsrichtung des Gehäuses 6 linear verschiebbar gelagert ist. Die Federvorrichtung 11 liegt indirekt über das Stützelement 27 an einer durch eine Einstellvorrichtung 13 verstellbar gelagerten Schraubenmutter 12 an, wobei sich bei einer Verstellung der Schraubenmutter 12 auch das Stützelement 27 in Längsrichtung des Gehäuses 6 mitbewegt. Am Schieber 18 ist eine Druckrolle 19 drehbar gelagert, wobei der Stellarm 9 über eine Steuerkurve 20, an welcher die von der Federvorrichtung 11 belastete Druckrolle 19 abläuft, verschwenkbar ist. Die Steuerkurve 20 ist in der gezeigten Figur am Stellarm 9 angeordnet oder ausgebildet, wobei die Steuerkurve 20 einen unterschiedlich radialen Abstand zur Drehachse 10 des Stellarmes 9 ausbildet. Die Steuerkurve 20 ist so ausgelegt, dass der Stellarm 9 gegen Ende der Schließbewegung in die vollständige Schließstellung gedrückt wird. Bei der Öffnungsbewegung des Stellarmes 9 gelangt die Druckrolle 19 auf einen Scheitelpunkt der Steuerkurve 20, wobei der Stellarm 9 durch die Kraft der Federvorrichtung 11 in Richtung Offenstellung gedrückt wird. Zur Dämpfung der Schließ- und/oder Öffnungsbewegung des Stellarmes 9 kann auch ein (hier nicht gezeigter) Dämpfer, insbesondere ein Fluiddämpfer, vorgesehen werden.

Fig. 2b zeigt den in Fig. 2a eingekreisten Bereich in einer vergrößerten Darstellung. Durch eine Einstellvorrichtung 13 ist die auf den Stellarm 9 wirkende Kraft der Federvorrichtung 11 einstellbar. Die Einstellvorrichtung 13 umfasst ein (vorzugsweise zur Werkzeugbetätigung ausgebildetes) Verstellrad 14, welches über ein Getriebe (vorzugsweise ein Kegelradgetriebe) mit dem Kopf einer Einstellschraube 16 zusammenwirkt. Über eine durch ein Werkzeug herbeigeführte Drehbewegung des Verstellrades 14 ist die Einstellschraube 16 verdrehbar, wobei sich die Schraubenmutter 12 entlang des Gewindeabschnitts 17 der Einstellschraube 16 bewegt. Alternativ kann das Verstellrad 14 auch zur Handbetätigung ausgebildet sein. Das Stützelement 27 ist im gezeigten Ausführungsbeispiel als - vorzugsweise stufenförmige - Hülse ausgebildet, welche den Gewindeabschnitt 27 zumindest abschnittsweise umgibt und welche auf Gewindeabschnitt 17 lose gelagert ist, d.h. mit dem Gewindeabschnitt 17 nicht im Gewindeeingriff steht.

Das Stützelement 27 liegt einerseits an der Federvorrichtung 11, andererseits an der verstellbaren Schraubenmutter 12 an. Das Stützelement 27 weist in der gezeigten Figur zwei Anschläge 28 auf, welche in einer dem Schraubenkopf der Einstellschraube 16 zugewandten Endlage mit einem gehäusefesten Gegenanschlag 29 (hier mit einem quer zur Längsrichtung des Gehäuses 6 verlaufenden Steg des Gehäuses 6) zusammenwirken. Auf diese Weise ist die Schraubenmutter 12 in der besagten Endlage von der Kraft der Federvorrichtung 11 vollständig entlastet. Erkennbar ist zudem ein Federelement 26, über das die Schraubenmutter 12 an einem Endbereich der Einstellschraube 16 mit einer von diesem Endbereich wegweisenden Kraft beaufschlagbar ist. Durch das Federelement 26 kann bei der Einstellung der Federkraft ein Verklemmen der Schraubenmutter 12 mit dem Schraubenkopf wirkungsvoll verhindert werden. Zur Verhinderung einer Verklemmung zwischen Schraubenmutter 12 und dem Kopf der Einstellschraube 16 ist vorgesehen, dass sich an den Gewindeabschnitt 17 ein gewindeloser Abschnitt 25 anschließt, wobei die Schraubenmutter 12 in einer der beiden Endlagen in diesen gewindelosen Abschnitt 25 eintreten und vom Gewindeabschnitt 17 außer Eingriff bringbar ist. Der Gewindeeingriff zwischen Schraubenmutter 12 und Gewindeabschnitt 17 ist auf diese Weise aufhebbar, die Einstellschraube 16 dreht sich bei einer Verdrehung des Verstellrades 14 leer durch. Dies hat den Vorteil, dass sich die Schraubenmutter 12 bei der minimalen Einstellung der Federkraft nicht mit dem Kopf der Einstellschraube 16 verklemmen kann. Überdies macht sich das Herausfahren der Schraubenmutter 12 aus dem Gewindeabschnitt 17 für einen Benutzer mit einem hörbaren Klickgeräusch bemerkbar. Damit die Schraubenmutter 12 bei Verdrehung des Verstellrades 14 in Gegenrichtung wieder in den Gewindeabschnitt 17 einfindet, ist zwischen der Schraubenmutter 12 und der Unterseite des Kopfes der Einstellschraube 16 das Federelement 26 wirksam, welches die Schraubenmutter 12 nach oben drückt, sodass die Schraubenmutter 12 in den Gewindeabschnitt 17 der Einstellschraube 16 wieder formschlüssig eingreifen kann. Die Kraft der Federvorrichtung 11 drückt bei Zusammenwirken der Schraubenmutter 12 mit dem Gewindeabschnitt 17 auf die Schraubenmutter 12. Wenn hingegen die Schraubenmutter 12 aus dem Gewindeabschnitt 17 ausgetreten ist und mit dem gewindelosen Abschnitt 25 zusammenwirkt, so ist die Schraubenmutter 12 durch das Abstützen des Stützelementes 27 am gehäusefesten Gegenanschlag 29 von der Kraft der Federvorrichtung 11 entlastet. Aufgrund der Tatsache, dass in der Endlage keine Federkraft auf die Schraubenmutter 12 wirkt, kann die Kraft des Federelementes 26 sehr gering dimensioniert werden. Eine kostengünstige Herstellung ergibt sich dadurch, wenn das Federelement 26 als federnd ausgebildetes Kunststoff-Spritzteil ausgebildet ist.

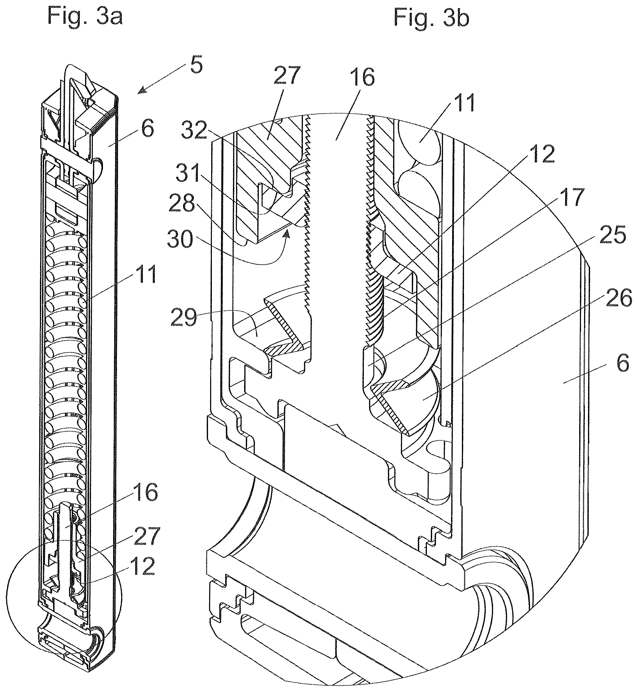

Fig. 3a zeigt den Stellantrieb 5 in einem perspektivischen Querschnitt, wobei das bewegbar gelagerte Stellglied 7 zum Bewegen des bewegbaren Möbelteiles 3 nicht dargestellt ist. Fig. 3b zeigt den in Fig. 3a eingekreisten Bereich in einer vergrößerten Darstellung. Die verstellbare Schraubenmutter 12 befindet sich im Eingriff mit dem Gewindeabschnitt 17 der Einstellschraube 16, das hülsenförmige Stützelement 27 ist hingegen nur lose am Gewindeabschnitt 17 gelagert. Die Federvorrichtung 11 drückt indirekt über das Stützelement 27 auf die verstellbare Schraubenmutter 12, wobei eine erste Stützfläche 31 der Schraubenmutter 12 an einer zweiten Stützfläche 32 des Stützelementes 27 anliegt. Die Kraft der Federvorrichtung 11 wird hierbei also von der Schraubenmutter 12 aufgenommen. Zu erkennen ist der Anschlag 28 des Stützelementes 27, der in einer unteren Endlage der Schraubenmutter 12 mit einem gehäusefestem Gegenanschlag 29 zusammenwirkt und dadurch die Schraubenmutter 12 in dieser Endlage von der Kraft der Federvorrichtung 11 vollständig entlastet. Das Stützelement 27 ist mit einer, vorzugsweise stufenförmigen, Ausnehmung 30 zur Aufnahme der Schraubenmutter 12 versehen. Das Stützelement 27 umgibt die Schraubenmutter 12 vollständig, wobei der Anschlag 28 die Schraubenmutter 12 in Richtung des gehäusefesten Gegenanschlages 29 überragt.

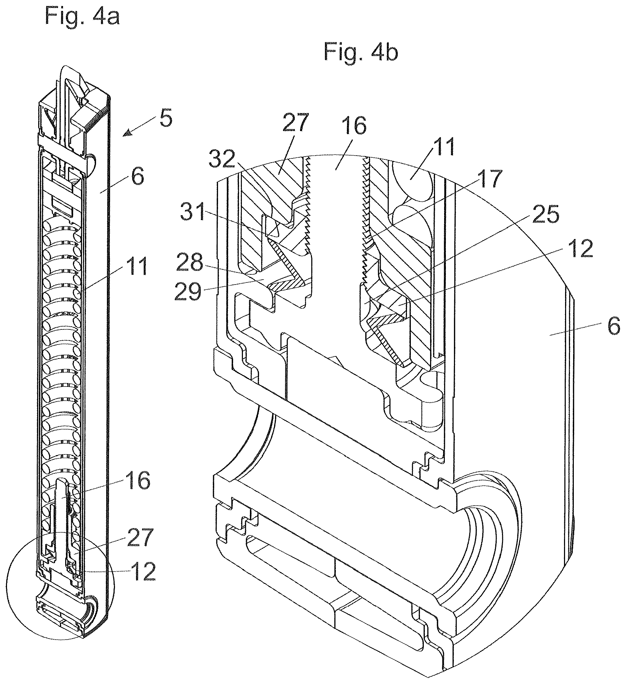

Fig. 4a und die vergrößerte Detailansicht gemäß Fig. 4b zeigen den Stellantrieb 5 mit verstellter Schraubenmutter 12, sodass also die auf das Stellglied 7 wirkende Kraft der Federvorrichtung 11 im Vergleich zu den Fig. 3a, 2b reduziert ist. Die Schraubenmutter 12 befindet sich gerade noch im Eingriff mit dem Gewindeabschnitt 17, der Anschlag 28 des Stützelementes 27 befindet sich zum gehäusefesten Gegenanschlag 29 in einer beabstandeten Position. Die erste Stützfläche 31 der Schraubenmutter 12 und die zweite Stützfläche 32 des Stützelementes 27 liegen weiterhin aneinander an.

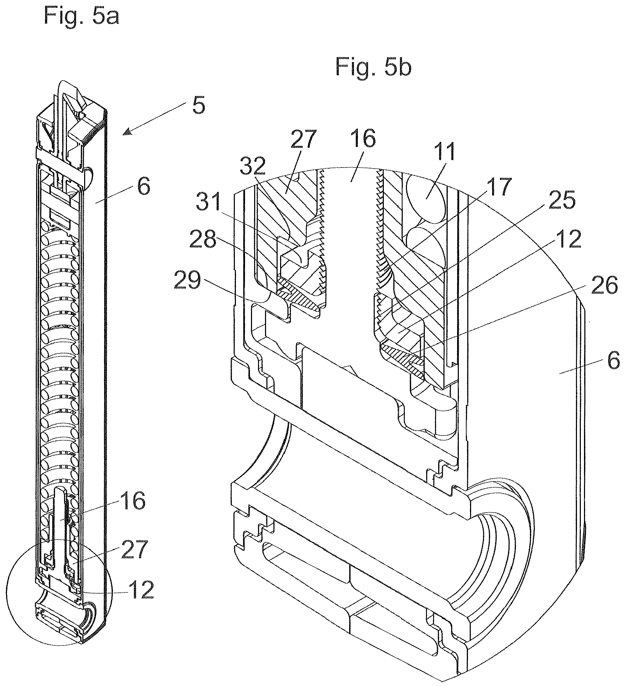

Fig. 5a und die vergrößerte Detailansicht gemäß Fig. 5b zeigen den Stellantrieb 5 mit einer in der Endlage befindlichen Schraubenmutter 12, wobei also die auf das Stellglied 7 wirkende Vorspannung am geringsten ist. Die Schraubenmutter 12 befindet sich nunmehr am gewindelosen Anschnitt 25 der Einstellschraube 16, wobei der Anschlag 28 am gehäusefesten Gegenanschlag 29 anliegt und die Kraft der Federvorrichtung 11 in das Gehäuse 6 des Stellantriebes 5 eingeleitet wird. Die erste Stützfläche 31 der Schraubenmutter 12 und die zweite Stützfläche 32 des Stützelementes 27 befinden sich nunmehr in einer beabstandeten Position relativ zueinander. Durch diesen in das Gehäuse 6 eingeleiteten Lastwechsel ist die Schraubenmutter 12 von der Kraft der Federvorrichtung 11 entlastet. Das Federelement 26 drückt die Schraubenmutter 12 vom Kopf der Einstellschraube 16 weg, d.h. in Richtung Gewindeabschnitt 17. Auf diese Weise wird ein Verklemmen zwischen Schraubenmutter 12 und Einstellschraube 16 verhindert, durch die Kraft des Federelementes 26 kann die Schraubenmutter 12 bei entsprechender Betätigung der Einstellvorrichtung 13 (Fig. 2b) relativ zum Gewindeabschnitt 17 wieder zentriert werden.

## Patentansprüche

1. Stellantrieb (5) zum Bewegen eines bewegbaren Möbelteiles (3), umfassend:
- zumindest ein bewegbar gelagertes Stellglied (7) zum Bewegen des bewegbaren Möbelteiles (3),
- eine Federvorrichtung (11) zur Kraftbeaufschlagung des Stellgliedes (7),
- eine Einstellvorrichtung (13), durch welche eine auf das Stellglied (7) wirkende Kraft der Federvorrichtung (11) einstellbar ist,
- wobei die Einstellvorrichtung (13) einen Gewindeabschnitt (17) und eine zwischen zwei Endlagen verstellbar gelagerte Schraubenmutter (12) aufweist, wobei die auf das Stellglied (7) wirkende Kraft der Federvorrichtung (11) durch Verstellen der Schraubenmutter (12) entlang des Gewindeabschnitts (17) einstellbar ist,
- wenigstens ein Stützelement (27), welches die Schraubenmutter (12) in zumindest einer der beiden Endlagen von der Kraft der Federvorrichtung (11) entlastet, wobei der Stellantrieb (5) ein Gehäuse (6) aufweist, **dadurch gekennzeichnet, dass** das Stützelement (27) in wenigstens einer der beiden Endlagen der Schraubenmutter (12) an einem gehäusefesten Gegenanschlag (29) abgestützt ist, wobei sich die Federvorrichtung (11) indirekt über das Stützelement (27) an der Schraubenmutter (12) abstützt.

2. Stellantrieb nach Anspruch 1, **dadurch gekennzeichnet, dass** das Stützelement (27) als Hülse ausgebildet ist, welche den Gewindeabschnitt (17) zumindest abschnittsweise umgibt.

3. Stellantrieb nach Anspruch 1 oder 2, **dadurch gekennzeichnet, dass** das Stützelement (27) am Gewindeabschnitt (17) lose gelagert ist.

4. Stellantrieb nach einem der Ansprüche 1 bis 3, **dadurch gekennzeichnet, dass** das Stützelement (27) eine, vorzugsweise stufenförmig ausgebildete, Ausnehmung (30) zur Aufnahme der Schraubenmutter (12) aufweist.

5. Stellantrieb nach einem der Ansprüche 1 bis 4, **dadurch gekennzeichnet, dass** zumindest ein Federelement (26) vorgesehen ist, durch das die Schraubenmutter (12) in zumindest einer Endlage mit einer von dieser Endlage wegweisenden Kraft beaufschlagbar ist.

6. Stellantrieb nach einem der Ansprüche 1 bis 5, **dadurch gekennzeichnet, dass** sich an den Gewindeabschnitt (17) ein gewindeloser Abschnitt (25) anschließt, wobei die Schraubenmutter (12) in einer der beiden Endlagen in diesen gewindelosen Abschnitt (25) eintreten und vom Gewindeabschnitt (17) außer Eingriff bringbar ist.

7. Stellantrieb nach Anspruch 6, **dadurch gekennzeichnet, dass** die Kraft der Federvorrichtung (11) bei Zusammenwirken der Schraubenmutter (12) mit dem Gewindeabschnitt (17) auf die Schraubenmutter (12) drückt und dass die Schraubenmutter (12) bei Zusammenwirken der Schraubenmutter (12) mit dem gewindelosen Abschnitt (25) von der Kraft der Federvorrichtung (11) durch das Abstützen des Stützelementes (27) an einem gehäusefesten Gegenanschlag (29) entlastet ist.

8. Stellantrieb nach einem der Ansprüche 1 bis 7, **dadurch gekennzeichnet, dass** die Federvorrichtung (11) zum Beaufschlagen des Stellgliedes (7) zumindest eine Schraubenfeder, vorzugsweise eine Druckfeder, aufweist.

9. Stellantrieb nach einem der Ansprüche 1 bis 8, **dadurch gekennzeichnet, dass** das Stellglied (7) als ein um eine Drehachse (10) schwenkbar gelagerter Stellarm (9) ausgebildet ist.

10. Stellantrieb nach Anspruch 9, **dadurch gekennzeichnet, dass** der Stellarm (9) über eine Steuerkurve (20), an welcher eine von der Federvorrichtung (11) belastete Druckrolle (19) abläuft, verschwenkbar ist.

11. Stellantrieb nach Anspruch 10, **dadurch gekennzeichnet, dass** die Steuerkurve (20) am Stellarm (9) angeordnet oder ausgebildet ist, wobei die Steuerkurve (20) einen unterschiedlich radialen Abstand zur Drehachse (10) des Stellarmes (9) ausbildet.

12. Stellantrieb nach einem der Ansprüche 1 bis 11, **dadurch gekennzeichnet, dass** die Einstellvorrichtung (13) ein Verstellrad (14) aufweist, durch welches die Schraubenmutter (12) entlang des Gewindeabschnitts (17) bewegbar ist.

13. Anordnung mit einem bewegbaren Möbelteil (3) und mit einem Stellantrieb (5) nach einem der Ansprüche 1 bis 12.

## Claims

1. An actuator (5) for moving a movable furniture part (3), including:
- at least one movably mounted actuating member (7) for moving the movable furniture part (3),
- a spring device (11) for applying a force to the actuating member (7),
- an adjusting device (13) for adjusting a force of the spring device (11) acting on the actuating member (7),
- wherein the adjusting device (13) includes a threaded portion (17) and a screw nut (12) mounted displaceably between two end positions, wherein the force of the spring device (11) acting on the actuating member (7) is adjustable by displacement of the screw nut (12) along the threaded portion (17),
- at least one support element (27) which relieves the screw nut (12) of the force of the spring device (11) in at least one of the two end positions,
- wherein the actuator (5) includes a housing (6),
**characterized in that** the support element (27), in at least one of the two end positions of the screw nut (12), bears against a counterpart abutment (29) which is fixed with respect to the housing (6), wherein the spring device (11) indirectly acts on the screw nut (12) via the support element (27).

2. The actuator according to claim 1, **characterized in that** the support element (27) is in the form of a sleeve configured to surround at least a part of the threaded portion (17).

3. The actuator according to claim 1 or 2, **characterized in that** the support element (27) is mounted loosely to the threaded portion (17).

4. The actuator according to one of the claims 1 to 3, **characterized in that** the support element (27) has a, preferably step-shaped, opening (30) for receiving the screw nut (12).

5. The actuator according to one of the claims 1 to 4, **characterized in that** there is provided at least one spring element (26) for acting upon the screw nut (12) in at least one end position with a force applied in a direction away from said end position.

6. The actuator according to one of the claims 1 to 5, **characterized in that** a threadless portion (25) adjoins the threaded portion (17), wherein in one of the two end positions, the screw nut (12) can pass into said threadless portion (27) and can be brought out of engagement with the threaded portion (17).

7. The actuator according to claim 6, **characterized in that** when the screw nut (12) is engaged with the threaded portion (17), the force of the spring device (11) presses onto the screw nut (12), and that the screw nut (12), when the screw nut (12) is located at the threadless portion (25), is relieved of the force of the spring device (11) by the support of the support element (27) against a counterpart abutment (29) which is fixed with respect to the housing (6).

8. The actuator according to one of the claims 1 to 7, **characterized in that** the spring device (11) for acting on the actuating member (7) includes at least one helical spring, preferably a compression spring.

9. The actuator according to one of the claims 1 to 8, **characterized in that** the actuating member (7) is in the form of an actuating arm (9) mounted pivotably about an axis of rotation (10).

10. The actuator according to claim 9, **characterized in that** the actuating arm (9) can be pivoted by way of a control curve (20) along which a pressure roller (19) loaded by the spring device (11) runs.

11. The actuator according to claim 10, **characterized in that** the control curve (20) is arranged or formed on the actuating arm (9), wherein the control curve (20) provides a differing radial spacing relative to the axis of rotation (10) of the actuating arm (9).

12. The actuator according to one of the claims 1 to 11, **characterized in that** the adjusting device (13) includes an adjusting wheel (14) for moving the screw nut (12) along the threaded portion (17).

13. An arrangement having a movable furniture part (3) and an actuator (5) according to one of the claims 1 to 12.

## Revendications

1. Actionneur (5) pour déplacer une partie de meuble mobile (3), comprenant :
- au moins un vérin (7) logé de façon mobile pour déplacer la partie de meuble mobile (3),
- un dispositif à ressort (11) pour l'application d'une force du vérin (7),
- un dispositif de réglage (13) par lequel peut être réglée une force agissant sur le vérin (7) du dispositif à ressort (11),
- dans lequel le dispositif de réglage (13) présente une section à filetage (17) et un écrou (12) logé de façon réglable entre deux positions d'extrémité, dans lequel la force agissant sur le vérin (7) du dispositif à ressort (11) peut être réglée par déplacement de l'écrou (12) le long de la section à filetage (17),
- au moins un élément d'appui (27), lequel décharge l'écrou (12) de la force du dispositif à ressort (11) dans au moins une des deux positions d'extrémité,
dans lequel l'actionneur (5) présente un boîtier (6), **caractérisé en ce que** l'élément d'appui (27) est appuyé dans au moins une des deux positions d'extrémité de l'écrou (12) sur une contre-butée (29) solidaire du boîtier, dans lequel le dispositif à ressort (11) s'appuie indirectement sur l'écrou (12) au moyen de l'élément d'appui (27).

2. Actionneur selon la revendication 1, **caractérisé en ce que** l'élément d'appui (27) est conçu comme une douille, laquelle entoure au moins par sections la section à filetage (17).

3. Actionneur selon la revendication 1 ou 2, **caractérisé en ce que** l'élément d'appui (27) est logé de façon amovible sur la section à filetage (17).

4. Actionneur selon l'une des revendications 1 à 3, **caractérisé en ce que** l'élément d'appui (27) présente un évidement (30), conçu de préférence en gradins, pour loger l'écrou (12).

5. Actionneur selon l'une des revendications 1 à 4, **caractérisé en ce qu'**au moins un élément à ressort (26) est prévu, par lequel, dans au moins une position d'extrémité, peut être appliquée à l'écrou (12) une force en éloignement de cette position d'extrémité.

6. Actionneur selon l'une des revendications 1 à 5, **caractérisé en ce que** se raccorde une section non filetée (25) à la section à filetage (17), dans lequel l'écrou (12), dans une des deux positions d'extrémité, est entré dans cette section non filetée (25) et peut être désengagé de la section à filetage (17).

7. Actionneur selon la revendication 6, **caractérisé en ce que** la force du dispositif à ressort (11) appui sur l'écrou (12) lors de l'interaction de l'écrou (12) avec la section à filetage (17) et **en ce que** l'écrou (12), lors de l'interaction de l'écrou (12) avec la section non filetée (25), est déchargé de la force du dispositif à ressort (11) par l'appui de l'élément d'appui (27) sur une contre-butée (29) solidaire du boîtier.

8. Actionneur selon l'une des revendications 1 à 7, **caractérisé en ce que** le dispositif à ressort (11) pour l'application du vérin (7) présente au moins un ressort cylindrique, de préférence un ressort de pression.

9. Actionneur selon l'une des revendications 1 à 8, **caractérisé en ce que** le vérin (7) est conçu comme un bras de réglage (9) logé de façon pivotante autour d'un axe de rotation (10).

10. Actionneur selon la revendication 9, **caractérisé en ce que** le bras de réglage (9) peut être pivoté par une came de commande (20), sur laquelle passe un galet presseur (19) chargé par le dispositif à ressort (11).

11. Actionneur selon la revendication 10, **caractérisé en ce que** la came de commande (20) est disposée ou est conçue sur le bras de réglage (9), dans lequel la came de commande (20) forme un écartement variablement radial par rapport à l'axe de rotation (10) du bras de réglage (9).

12. Actionneur selon l'une des revendications 1 à 11, **caractérisé en ce que** le dispositif de réglage (13) présente une roue de réglage (14), par laquelle l'écrou (12) peut être déplacé le long de la section à filetage (17).

13. Dispositif avec une partie de meuble mobile (3) et avec un actionneur (5) selon l'une des revendications 1 à 12.
